# EUROPEAN PATENT SPECIFICATION

(11) **EP 2 481 894 B1**
(45) Date of publication and mention of the grant of the patent: **16.11.2016**
(21) Application number: 12152230.4
(22) Date of filing: 24.01.2012
(51) Int. Cl.: F01K 13/00, F01D 15/10, H02K 15/00

(54) **Method for retrofitting a power plant**
Verfahren zur Nachrüstung eines Kraftwerks
Procédé de modification d'une centrale électrique

(30) Priority: 26.01.2011 EP 11152162
(43) Date of publication of application: 01.08.2012
(73) Proprietor: General Electric Technology GmbH, 5400 Baden (CH)
(72) Inventor: Teufel, Daniel, 5415 Rieden (CH); Rösch, Andreas, 79730 Murg 3 (DE); Dalessandro, Luca, 8005 Zürich (CH)
(74) Representative: General Electric Technology GmbH

(56) References cited:
- US-A- 4 912 354
- US-A- 5 992 906
- US-A1- 2001 029 906
- US-A1- 2002 149 277
- US-A1- 2004 194 467

## Description

The present invention relates to a method for retrofitting a power plant.

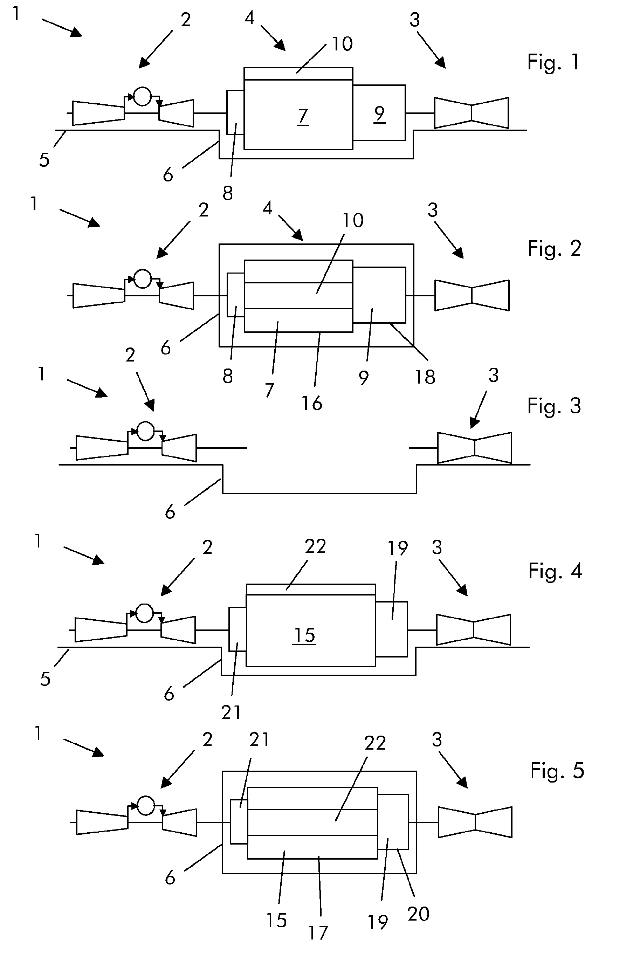

Reference to figure 1 is hereinafter made. Power plants traditionally have a prime mover or motor which drives a generator; in particular figure 1 shows an example of a power plant 1 with a first motor 2 being a gas turbine and a second motor 3 being a steam turbine; both the gas turbine 2 and the steam turbine 3 are connected at opposite sides of a generator 4.

The gas turbine 2 and the steam turbine 3 lie on a basement 5 and the generator 4 is housed within a foundation 6.

The generator 4 includes and active part and a non-active part.

The active part generates the electric power and typically includes a stator with the stator windings and a rotor with the field windings; in the following the active part is referred to with reference number 7.

The non-active part includes the auxiliaries needed for the correct operation of the active part 7; for example figure 1 shows a gear box 8 for mechanically coupling the gas turbine 2 to the rotor of the generator 4, an exciter 9 for supplying electric power (typically DC electric power) to the field windings, and a cooler 10.

Naturally also other auxiliaries can be provided or the cited auxiliaries could not be provided or could be provided at a different location according to the needs and the features of the generator. In this respect the non-active part could be a compressor (for directing compressed air into the active part and cool it) and/or a bushing structure.

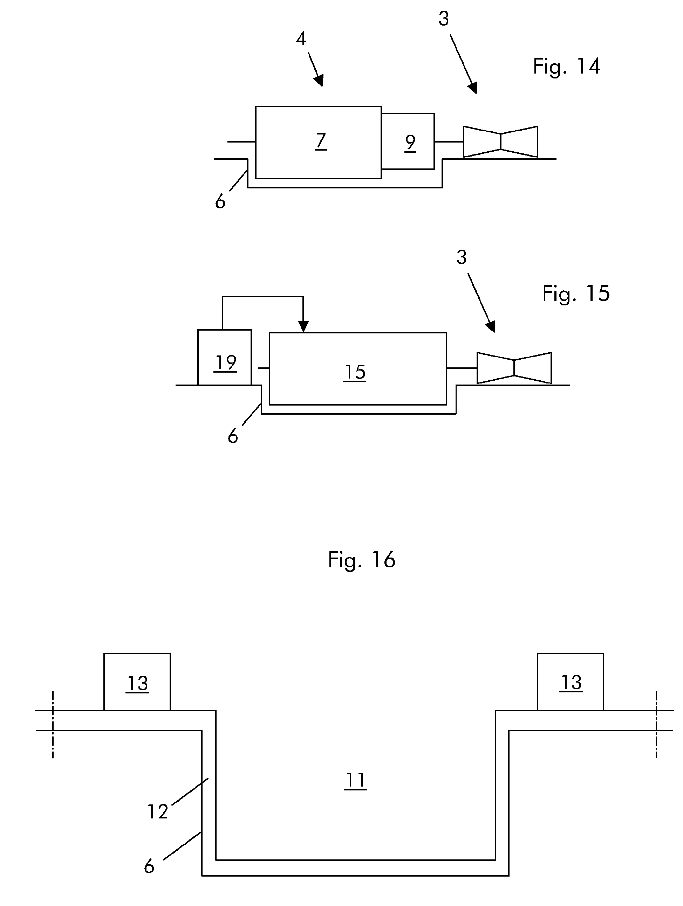

Typically (for large generators), the foundation 6 includes (figure 16) a pit 11 with a concrete foundation basement 12 for the stator and bearings 13 for the rotor of the generator 4.

The basement 12 (in particular the structure and material thereof) and the bearings 13 (in particular the position or mutual distance thereof) must be designed in order to guarantee a safe rotor dynamics and in particular to avoid resonance frequencies for the rotor (typically around 100-120 Hz for generators operating at 50-60 Hz), because they could be very detrimental and could severely limit the generator reliability.

During operation, the gas turbine 2 and steam turbine 3 drive the generator 4 such that it generates electric power; this electric power is then typically fed to an electric grid (not shown).

In order to increase the electric power that is generated, power plants can be retrofitted to be upgraded.

For example the gas turbine 2 and/or the steam turbine 3 can be replaced with motors of larger power. Alternatively, the stator and/or rotor blades of the gas turbine and/or steam turbine can be replaced, or the temperature of the hot gases expanded within the gas turbine can be increased and/or the features of the steam expanded within the steam turbine can be improved (i.e. in the latter cases only an operational upgrade could be carried out).

Thus a number of possibilities exist to increase the mechanical power that the motors provide to the generator to produce electric power; it is clear that together with the motor upgrade (i.e. gas turbine and/or steam turbine upgrade) also an upgrade of the generator is needed, such that the generator is able to cope with the increased mechanical power that is available.

US 2001029906 A1 describes an engine generator with an engine, a generator having a generating unit including an outer rotor and stator, and a cooling fan disposed between the engine and the generator. The generating unit is housed within a fan cover which is provided for accommodating the cooling fan, the stator being mounted to the inner side of the fan cover. As the single fan cover encloses the generating unit, a reduction in the number of components and an improvement in water-proof performance are achieved.

In order to save time and costs, the foundation with its basement and the bearings (or at least the seats or positions of the bearings when the bearings are replaced) are often reutilised; in addition, also the motors (when this is possible or needed) could be reutilised.

This causes several space constrains, because the new generator must be housed within the original foundation and in a number of cases it must be connected to the existing motors.

For these reasons, generator upgrade is usually achieved by simply rewinding the stator and rotor windings.

It is clear that, with such a generator retrofitting, the achievable increase of mechanical power that the generator is able to convert into electric power is limited.

US 5,992,906 discloses a method for replacing a larger generator with a smaller generator placed on a metal frame.

### SUMMARY OF THE INVENTION

An aspect of the invention is to provide a method for retrofitting a power plant by which a large power upgrade can be achieved, while at the same time complying with the space constrains.

In particular, an aspect of the invention is to indicate a method by which the power plant can be retrofitted to achieve a large power increase, while reutilising at least its foundation.

This and further aspects are attained according to the invention by providing a method in accordance with the accompanying claims.

### BRIEF DESCRIPTION OF THE DRAWINGS

Further characteristics and advantages of the invention will be more apparent from the description of a preferred but non-exclusive embodiment of the method, illustrated by way of non-limiting example in the accompanying drawings, in which:
Figures 1 and 2 schematically show a power plant before retrofitting respectively in a side and top view;
Figure 3 schematically shows the power plant during retrofitting;
Figures 4 and 5 schematically show the power plant after retrofitting respectively in a side and top view;
Figures 6 and 7 schematically show a side view and a top view of the generator before retrofitting (dashed line, original generator) together with the generator after retrofitting (solid line, new generator);
Figures 8, 9 and 10, 11 respectively show two different embodiments of the method;
Figures 12 and 13 show a preferred embodiment of the method;
Figures 14 and 15 show another embodiment of the method; and
Figure 16 shows a foundation for a generator.

### DETAILED DESCRIPTION OF EMBODIMENTS OF THE INVENTION

A first embodiment of the method is shown in figures 1 through 7.

In particular figures 1 and 2 show the power plant 1 before retrofitting.

As shown and as already described, the generator 4 comprises the original active part 7 that produces electric power, and the original non-active parts cooperating with the original active part 7.

The original non-active parts include, for example, the gear box 8, the exciter 9 and the cooler 10; in other examples the original non-active part can include a compressor, one or more fans and/or a bushing system. Naturally in further embodiments of the power plant 1 also different non-active parts and/or different combinations and/or locations thereof are possible.

In this example particular reference to the exciter 9 is made, it could be an exciter with slip rings. As shown the original active part 7 and the original non-active part being the exciter 9 are adjacent to each other.

The active part 7 and the non-active part being the exciter 9 are housed within the foundation 6 that includes the pit 11 with the foundation basement 12 for the stator and the bearings 13 for the rotor of the generator 4.

According to the method, the original active part 7 of the generator 4 is removed.

Thus also the original non-active part being the exciter 9 is removed (naturally also the gear box 8 and cooler 10 are removed).

Figure 3 shows an intermediate step of the method with the power plant without the generator 4.

Thus, the method comprises providing a new active part 15 that is larger than the original active part 7.

The new active part 15 extends over a zone that was before occupied by the original active part 7 and over a zone that was before occupied by the original non-active part being the exciter 9.

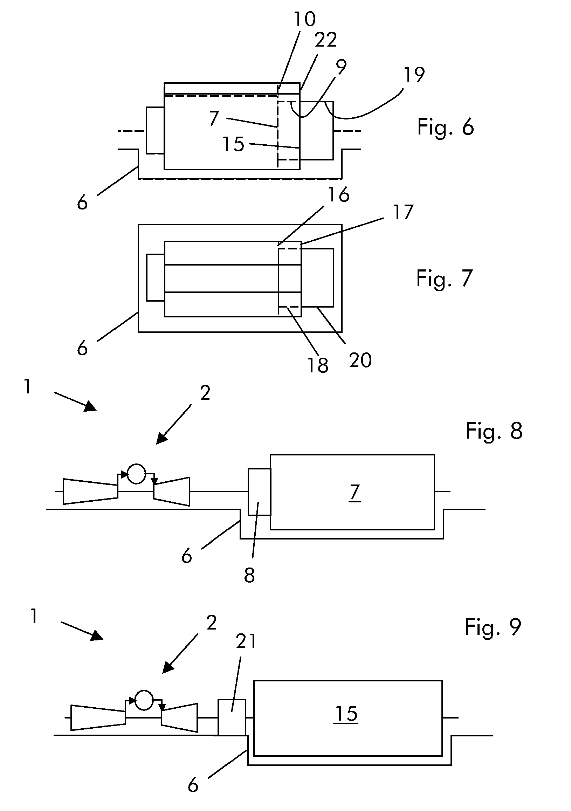

In this respect, figure 7 shows the footprint 16 of the original active part 7, the footprint 17 of the new active part 15 and the footprint 18 of the original non-active part being the exciter 9.

Advantageously the new active part is housed within the foundation 6 being the same foundation in which the original active part 7 was housed.

In addition, the bearings 13 are the same as the original bearings or, in case they are replaced, their seats or positions are the same; in other words the mutual distance between the bearings 13 does not change, hence the dynamic behaviour of the rotor does not significantly change with respect to the original rotor. This ensures that the resonance frequencies of the new rotor are similar to those of the original rotor and, in any case, far apart from those of the foundation 6. This allows a reliable operation of the new generator without the need of re-designing the foundation 6.

Thus a new non-active part is provided (in particular a new exciter 19).

In this example, the new exciter 19 is smaller than the original exciter 9 (it could be a brushless exciter); in this respect figure 7 also shows the footprint 20 of the new non-active part being the exciter 19.

The original gear box 8 and the original cooler 10 can also be replaced (references 21 and 22 respectively indicate a new gear box and a new cooler), but in this example their configuration is not changed to make space for the new active part 15.

In this way the active part of the generator is housed within the same foundation before and after retrofitting but the active part after retrofitting (i.e. the active part of the new generator) is larger than the active part before retrofitting (i.e. the original active part); this allows the generator after retrofitting to generate a larger electric power and to be able to cope with an increased mechanical power from the motors than before retrofitting.

Figures 8-9 show a different embodiment of the method; in this example the same numbers indicate the same or similar elements to those already described.

In particular figure 8 shows the power plant 1 before retrofitting; in this case the power plant has one single motor being the gas turbine 2 and the original non-active part whose configuration is changed to make space for the larger new active part 15 is the gear box 8; in particular figure 8 shows a gear box 8 within the foundation 6.

Figure 9 shows the power plant of figure 8 after retrofitting with the new active part 15 housed within the foundation 6 and a new gear box 21 housed outside of the foundation 6.

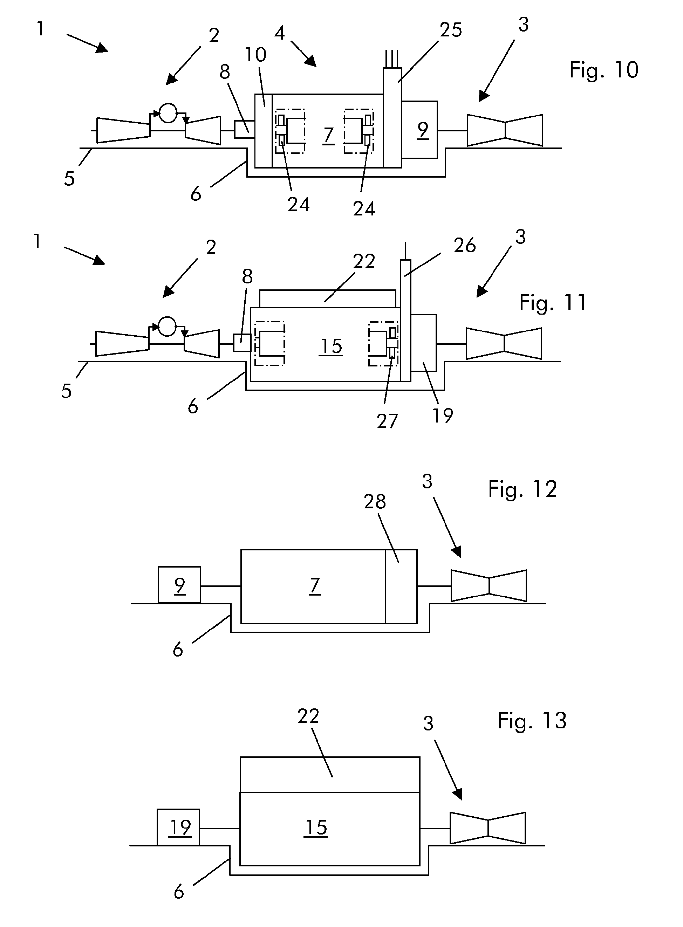

Figures 10 and 11 show a further example of the method; also in this example the same numbers indicate the same or similar elements to those already described.

In particular, in this example the dimensions and/or position of more than one non-active parts have been changed to increase the space available for the active part.

Figure 10 shows the power plant 1 before retrofitting with the active part 7 and the non-active parts that include: a vertical cooler 10, an exciter 9, two cooling fans 24 (one at each axial side of the rotor) and a bushing system 25 (to supply the electric power generated by the generator outside of the generator casing).

Figure 11 shows the power plant 1 after retrofitting.

The new active part 15 and the new non-active part being the new cooler 22 are overlapped; in particular the new cooler 22 (horizontal cooler) is arranged above the new active part 15.

In addition, a new bushing system 26 and a new exciter 19 have been provided; they are shorter than the original bushing system 25 and exciter 9.

Moreover, the two original fans 24 of the generator shown in figure 10 have been replaced with one single fan 27; i.e. one of the fans 24 has been replaced with one fan 27 and the other fan 24 has not been replaced.

The examples above show that the original active part 7 and the original non-active parts (such as the gear box 8, exciter 9, cooler 10, fan 24, bushing system 25) are preferably axially linked.

In this case the new larger active part 15 is axially longer than the original active part 7.

When the new non-active part is smaller than the original non-active part, the new non-active part can be axially shorter than the original non-active part (as shown for the exciter in figures 1-7 and the exciter and bushing system in figures 10-11).

When the new active part 15 and the new non-active part are overlapped, the new non-active part is preferably arranged above the new active part 15 (such as the cooler in figures 10-11).

Figures 12 and 13 show a preferred embodiment of the invention; also in this embodiment the same numbers indicate the same or similar elements to those already described.

In this embodiment the original generator (figure 12) has an active part 7 with a compressor 28 (or fan) that urges compressed air within the active part 7 to cool it. The active part 7 is connected to a steam turbine 3 and an exciter 9. As shown, the active part 7 and the compressor 28 are housed within the foundation 6, but the exciter 9 and the steam turbine 3 lie outside of the foundation 6.

Figure 13 shows the generator after retrofitting.

In this case the original active part 7 has been replaced with a new, larger active part 15 and the original compressor 28 has been replaced with a cooler such as for example a horizontal cooler 22 that is connected above the new active part 15.

Thus in this example the original non-active part being the compressor 28 has been replaced with a different non-active part being the cooler 22 having the same cooling function.

The original exciter 9 may be replaced or not and, in any case, it lies outside of the foundation 6. Likewise, also the steam turbine 3 can be replaced or not and it lies outside of the foundation 6.

Figures 14 and 15 show a further embodiment of the method; also in this embodiment the same numbers indicate the same or similar elements to those already described.

In particular, figure 14 shows an example of a generator 4 before retrofitting with the original active part 7 and the original non-active part (exciter 9) housed within the foundation 6.

Figure 15 shows the generator after retrofitting, with the new active part 15 housed within the foundation 6 and the new non-active part (new exciter 19) that lies outside of the foundation 6.

Upgrade of the motor can be achieved by improving the motor operation, for example increasing the temperature of the hot gases circulating within the gas turbine or improving the features of the steam circulating within the steam turbine.

Alternatively components of the motor can be replaced, for example the stator and/or rotor blades of the gas turbine and/or steam turbine can be replaced and/or the stator and/or rotor blades of the gas turbine compressor can be replaced.

Anyhow, in a preferred embodiment, upgrading the motor is achieved by replacing it (i.e. the whole motor is replaced).

Retrofitting the power plant according to this method proved to be very time and cost effective, because the foundation can be reused or (if not reused) need not be redesigned.

Naturally the features described may be independently provided from one another.

In practice the materials used and the dimensions can be chosen at will according to requirements and to the state of the art.

### REFERENCE NUMBERS

- 1: power plant
- 2: gas turbine
- 3: steam turbine
- 4: generator
- 5: basement
- 6: foundation
- 7: active part
- 8: gear box
- 9: exciter
- 10: cooler
- 11: pit
- 12: foundation basement
- 13: bearings
- 15: new active part
- 16: footprint of 7
- 17: footprint of 15
- 18: footprint of 9
- 19: new exciter
- 20: footprint of 19
- 21: new gearbox
- 22: new cooler
- 24: fan
- 25: original bushing system
- 26: new bushing system
- 27: new fan
- 28: compressor

## Claims

1. Method for retrofitting a power plant (1) comprising a generator (4) connected to at least a motor (2, 3), the generator (4) comprising:
- an original active part (7) to produce electric power, and
- an original non-active part (8, 9, 10, 24, 25, 28) cooperating with the original active part (7),
- a foundation (6) in which the original active part (7) and the original non-active part (8, 9, 10, 24, 25, 28) are housed,
the method comprising the steps of:
- removing the original active part (7),
- removing the original non-active part (8, 9, 10, 24, 25, 28),
- providing a new active part (15) that:
- is larger than the original active part (7), and
- at least partly extends over a zone that was before occupied by the original active part (7), and
- at least partly extends over a zone that was before occupied by the original non-active part (8, 9, 10, 24, 25, 28), and
- is housed within the foundation (6),
- providing a new non-active part (19, 21, 22, 26, 27) replacing the original non-active part (8, 9, 10, 24, 25, 28), wherein the new active part (15) and the new non-active part (19, 21, 22, 26, 27) are at least partially overlapped, and the new non-active part (19, 21, 22, 26, 27) comprise:
- a cooler for the active part, and/or
- an exciter, and/or
- a gear box, and/or
- a fan (24) and/or
- a compressor and/or
- a bushing structure.

2. Method according to claim 1, **characterised by** providing a new non-active part (19, 21, 22, 26, 27) replacing the original non-active part (8, 9, 10, 24, 25, 28), wherein the new non-active part (19, 21, 22, 26, 27) is smaller than the original non-active part (8, 9, 10, 24, 25, 28).

3. Method according to claim 1, **characterised by** providing a new non-active part (19, 21, 22, 26, 27) replacing the original non-active part (8, 9, 10, 24, 25, 28), wherein the new non-active part (19, 21, 22, 26, 27) is at least partly outside of the foundation (6).

4. Method according to claim 1, **characterised in that** the original non-active part (8, 9, 10, 24, 25, 28) is not replaced.

5. Method according to claim 1, **characterised in that** the original non-active part (8, 9, 10, 24, 25, 28) is adjacent to the original active part (7).

6. Method according to claim 5, **characterised in that** the original active part (7) and the original non-active part (8, 9, 10, 24, 25, 28) are axially linked.

7. Method according to claim 1, **characterised in that** the new larger active part (15) is axially longer than the original active part (7).

8. Method according to claim 2, **characterised in that** the new smaller non-active part (19, 21, 22, 26, 27) is axially shorter than the original non-active part (8, 9, 10, 24, 25, 28).

9. Method according to claim 1, **characterised in that** the at least partly overlapped new active part (15) and new non-active part (19, 21, 22, 26, 27) have the new non-active part (19, 21, 22, 26, 27) arranged at least partly above the new active part (15).

10. Method according to claim 1 or 2, **characterised in that** the new non-active part (19, 21, 22, 26, 27) lies within the foundation (6).

11. Method according to claim 1 or 2 or 3, **characterised in that** the original non-active part (8, 9, 10, 24, 25, 28) is replaced with a different new non-active part (19, 21, 22, 26, 27) having the same function.

12. Method according to claim 1, **characterised in that** the foundation (6) includes a pit (11) with a foundation basement (12) for a stator and bearings (13) for a rotor of the generator (4).

13. Method according to claim 1, **characterised by** upgrading the at least a motor (2, 3).

## Patentansprüche

1. Verfahren zur Nachrüstung eines Kraftwerks (1), umfassend:
einen Generator (4), der mit mindestens einem Motor (2, 3) verbunden ist, wobei der Generator (4) umfasst:
ein ursprüngliches aktives Teil (7) zum Erzeugen von Strom, und
ein ursprüngliches nicht aktives Teil (8, 9, 10, 24, 25, 28), das mit dem ursprünglichen aktiven Teil (7) zusammenwirkt,
ein Fundament (6), in dem das ursprüngliche aktive Teil (7) und das ursprüngliche nicht aktive Teil (8, 9, 10, 24, 25, 28) untergebracht sind, wobei das Verfahren die Schritte umfasst:
Entfernen des ursprünglichen aktiven Teils (7),
Entfernen des ursprünglichen nicht aktiven Teils (8, 9, 10, 24, 25, 28),
Bereitstellen eines neuen aktiven Teils (15), das:
- größer als das ursprüngliche aktive Teil (7) ist, und
- sich mindestens teilweise über eine Zone erstreckt, die zuvor vom ursprünglichen aktiven Teil (7) eingenommen wurde, und
- sich mindestens teilweise über eine Zone erstreckt, die zuvor von dem ursprünglichen nicht aktiven Teil (8, 9, 10, 24, 25, 28) eingenommen wurde, und
- innerhalb des Fundaments (6) untergebracht ist,
Bereitstellen eines neuen nicht aktiven Teils (19, 21, 22, 26, 27), welches das ursprüngliche nicht aktive Teil (8, 9, 10, 24, 25, 28) ersetzt, wobei sich das neue aktive Teil (15) und das neue nicht aktive Teil (19, 21, 22, 26, 27) mindestens teilweise überlappen, und das neue nicht aktive Teil (19, 21, 22, 26, 27) umfasst: einen Kühler für das aktive Teil, und/oder einen Erreger und/oder einen Getriebekasten und/oder ein Gebläse (24) und/oder einen Verdichter und/oder eine Lagerbuchse.

2. Verfahren nach Anspruch 1, **gekennzeichnet durch** das Bereitstellen eines neuen nicht aktiven Teils (19, 21, 22, 26, 27), welches das ursprüngliche nicht aktive Teil (8, 9, 10, 24, 25, 28) ersetzt, wobei das neue nicht aktive Teil (19, 21, 22, 26, 27) kleiner als das ursprüngliche nicht aktive Teil (8, 9, 10, 24, 25, 28) ist.

3. Verfahren nach Anspruch 1, **gekennzeichnet durch** das Bereitstellen eines neuen nicht aktiven Teils (19, 21, 22, 26, 27), welches das ursprüngliche nicht aktive Teil (8, 9, 10, 24, 25, 28) ersetzt, wobei sich das neue nicht aktive Teil (19, 21, 22, 26, 27) mindestens teilweise außerhalb des Fundaments (6) befindet.

4. Verfahren nach Anspruch 1, **dadurch gekennzeichnet, dass** das ursprüngliche nicht aktive Teil (8, 9, 10, 24, 25, 28) nicht ersetzt wird.

5. Verfahren nach Anspruch 1, **dadurch gekennzeichnet, dass** das ursprüngliche nicht aktive Teil (8, 9, 10, 24, 25, 28) benachbart zum ursprünglichen aktiven Teil (7) ist.

6. Verfahren nach Anspruch 5, **dadurch gekennzeichnet, dass** das ursprüngliche aktive Teil (7) und das ursprüngliche nicht aktive Teil (8, 9, 10, 24, 25, 28) axial verknüpft sind.

7. Verfahren nach Anspruch 1, **dadurch gekennzeichnet, dass** das neue größere aktive Teil (15) axial länger als das ursprüngliche aktive Teil (7) ist.

8. Verfahren nach Anspruch 2, **dadurch gekennzeichnet, dass** das neue kleinere nicht aktive Teil (19, 21, 22, 26, 27) axial kürzer als das ursprüngliche nicht aktive Teil (8, 9, 10, 24, 25, 28) ist.

9. Verfahren nach Anspruch 1, **dadurch gekennzeichnet, dass** das mindestens teilweise überlappte neue aktive Teil (15) und das neue nicht aktive Teil (19, 21, 22, 26, 27) das neue nicht aktive Teil (19, 21, 22, 26, 27) mindestens teilweise oberhalb des neuen aktiven Teils (15) angeordnet haben.

10. Verfahren nach Anspruch 1 oder 2, **dadurch gekennzeichnet, dass** das neue nicht aktive Teil (19, 21, 22, 26, 27) innerhalb des Fundaments (6) liegt.

11. Verfahren nach Anspruch 1 oder 2 oder 3, **dadurch gekennzeichnet, dass** das ursprüngliche nicht aktive Teil (8, 9, 10, 24, 25, 28) durch ein anderes neues nicht aktives Teil (19, 21, 22, 26, 27) mit der gleichen Funktion ersetzt wird.

12. Verfahren nach Anspruch 1, **dadurch gekennzeichnet, dass** das Fundament (6) eine Grube (11) mit einem Fundamentgrund (12) für einen Stator und Lager (13) für einen Rotor des Generators (4) aufweist.

13. Verfahren nach Anspruch 1, **gekennzeichnet durch** das Aufrüsten des mindestens einen Motors (2, 3).

## Revendications

1. Procédé de modification d'une centrale électrique (1) comprenant un générateur (4) connecté à au moins un moteur (2, 3), le générateur (4) comprenant:
- une partie active originale (7) pour produire du courant électrique, et
- une partie inactive originale (8, 9, 10, 24, 25, 28) qui coopère avec la partie active originale (7),
- une fondation (6) dans laquelle la partie active originale (7) et la partie inactive originale (8, 9, 10, 24, 25, 28) sont logées,
le procédé comprenant les étapes suivantes:
- enlever la partie active originale (7),
- enlever la partie inactive originale (8, 9, 10, 24, 25, 28),
- fournir une nouvelle partie active (15) qui:
- est plus grande que la partie active originale (7), et
- s'étend au moins partiellement au-dessus d'une zone qui était auparavant occupée par la partie active originale (7), et
- s'étend au moins partiellement au-dessus d'une zone qui était auparavant occupée par la partie inactive originale (8, 9, 10, 24, 25, 28), et
- est logée à l'intérieur de la fondation (6),
- fournir une nouvelle partie inactive (19, 21, 22, 26, 27) qui remplace la partie inactive originale (8, 9, 10, 24, 25, 28), dans lequel la nouvelle partie active (15) et la nouvelle partie inactive (19, 21, 22, 26, 27) se chevauchent au moins partiellement, et la nouvelle partie inactive (19, 21, 22, 26, 27) comprend:
- un refroidisseur pour la partie active, et/ou
- un excitateur, et/ou
- une boîte à engrenages; et/ou
- un ventilateur (24), et/ou
- un compresseur, et/ou
- une structure de douille.

2. Procédé selon la revendication 1, **caractérisé par** la fourniture d'une nouvelle partie inactive (19, 21, 22, 26, 27) pour remplacer la partie inactive originale (8, 9, 10, 24, 25, 28), dans lequel la nouvelle partie inactive (19, 21, 22, 26, 27) est plus petite que la partie inactive originale (8, 9, 10, 24, 25, 28).

3. Procédé selon la revendication 1, **caractérisé par** la fourniture d'une nouvelle partie inactive (19, 21, 22, 26, 27) pour remplacer la partie inactive originale (8, 9, 10, 24, 25, 28), dans lequel la nouvelle partie inactive (19, 21, 22, 26, 27) est située au moins partiellement à l'extérieur de la fondation (6).

4. Procédé selon la revendication 1, **caractérisé en ce que** la partie inactive originale (8, 9, 10, 24, 25, 28) n'est pas remplacée.

5. Procédé selon la revendication 1, **caractérisé en ce que** la partie inactive originale (8, 9, 10, 24, 25, 28) est adjacente à la partie active originale (7).

6. Procédé selon la revendication 5, **caractérisé en ce que** la partie active originale (7) et la partie inactive originale (8, 9, 10, 24, 25, 28) sont reliées axialement.

7. Procédé selon la revendication 1, **caractérisé en ce que** la nouvelle partie active (15) est axialement plus longue que la partie active originale (7).

8. Procédé selon la revendication 2, **caractérisé en ce que** la nouvelle partie inactive plus petite (19, 21, 22, 26, 27) est axialement plus courte que la partie inactive originale (8, 9, 10, 24, 25, 28).

9. Procédé selon la revendication 1, **caractérisé en ce que** la nouvelle partie active (15) et la nouvelle partie inactive (19, 21, 22, 26, 27) se chevauchant au moins partiellement présentent la nouvelle partie inactive (19, 21, 22, 26, 27) agencée au moins partiellement au-dessus de la nouvelle partie active (15).

10. Procédé selon la revendication 1 ou 2, **caractérisé en ce que** la nouvelle partie inactive (19, 21, 22, 26, 27) est disposée à l'intérieur de la fondation (6).

11. Procédé selon la revendication 1 ou 2 ou 3, **caractérisé en ce que** la partie inactive originale (8, 9, 10, 24, 25, 28) est remplacée par une nouvelle partie inactive différente (19, 21, 22, 26, 27) qui remplit la même fonction.

12. Procédé selon la revendication 1, **caractérisé en ce que** la fondation (6) comprend une fosse (11) présentant un socle de fondation (12) pour un stator et des paliers (13) pour un rotor du générateur (4).

13. Procédé selon la revendication 1, **caractérisé par** la remise à niveau dudit au moins un moteur (2, 3).
